Europäisches Patentamt

European Patent Office

Office européen des brevets

(11) Numéro de publication: **0 274 326 B1**

(12) **FASCICULE DE BREVET EUROPEEN**

(45) Date de publication de fascicule du brevet:
09.10.91

(51) Int. Cl.⁵: **H02H 1/00**

(21) Numéro de dépôt: **87402939.0**

(22) Date de dépôt: **21.12.87**

(54) **Détection d'arc sur un jeu de barres d'un tableau ou coffret électrique.**

(30) Priorité: **08.01.87 FR 8700242**

(43) Date de publication de la demande:
**13.07.88 Bulletin 88/28**

(45) Mention de la délivrance du brevet:
**09.10.91 Bulletin 91/41**

(84) Etats contractants désignés:
**BE CH DE ES GB IT LI SE**

(56) Documents cités:
**DE-A- 3 441 870**
**US-A- 4 067 052**

(73) Titulaire: **MERLIN GERIN**
**Rue Henri Tarze**
**F-38050 Grenoble Cédex(FR)**

(72) Inventeur: **Menier, Alain**
**Merlin Gerin - Sce.Brevets**
**F-38050 Grenoble cedex(FR)**
Inventeur: **Turc, Jean**
**Merlin Gerin - Sce.Brevets**
**F-38050 Grenoble cedex(FR)**
Inventeur: **Langeac, Daniel**
**Merlin Gerin - Sce.Brevets**
**F-38050 Grenoble cedex(FR)**

(74) Mandataire: **Kern, Paul et al**
**Merlin Gerin Sce. Brevets 20, rue Henri Tarze**
**F-38050 Grenoble Cédex(FR)**

Rank Xerox (UK) Business Services

## Description

L'invention est relative à un dispositif de détection d'un arc sur un jeu de barres d'un tableau ou d'un coffret électrique moyenne tension ou basse tension ayant une première et une deuxième barres de polarités différentes, qui s'étendent parallèlement.

Il est important de détecter rapidement la naissance d'un arc dans une cellule pour limiter les dégâts au maximum et interrompre immédiatement l'alimentation électrique en faisant déclencher le disjoncteur en tête de la cellule.

Le temps de réponse du déclencheur instantané du disjoncteur est relativement long et dans les systèmes de protection sélective, ce temps est volontairement augmenté pour permettre au disjoncteur en aval de s'ouvrir et d'éliminer éventuellement le court-circuit. Il a déjà été proposé de provoquer le déclenchement instantané du disjoncteur lors d'une détection d'un arc et un dispositif connu fait usage de cellules photo-électriques captant la lumière émise par l'arc. Ce dispositif nécessite un grand nombre de cellules photo-électriques, lorsque le jeu de barres s'étend dans plusieurs compartiments, ce qui complique l'installation, et les cellules photo-électriques doivent être protégées des autres sources de lumière pour éviter des déclenchements intempestifs.

De façon similaire, le dispositif connu du document US-A-4067 052 propose l'utilisation de telles cellules photo-électriques comme mesure supplémentaire.

Une détection globale d'arcs dans un coffret électrique y est prévu au moyen d'une chambre à détection de ionisation à l'intérieur du coffret, de préférence montée en haut dans le coffret.

Le but de la présente invention est de permettre la réalisation d'un système de détection d'un arc naissant sur un jeu de barres qui assure l'ouverture anticipée du disjoncteur d'alimentation du jeu de barres avant que le courant d'arc ait fortement détérioré la structure de la cellule. Le dispositif de détection selon l'invention est basé sur la mesure d'un degré d'ionisation des gaz émis par le plasma d'arc et il présente l'avantage d'être délocalisé, c'est-à-dire qu'un système unique de détection permet de couvrir toute la longueur du jeu de barres, éventuellement dans différents compartiments. Le dispositif de détection d'arc fonctionne à propre tension, ce qui facilite son installation ou éventuellement son adjonction à des systèmes existants.

Le dispositif de détection d'arc est caractérisé en ce qu'il comprend :

- une électrode allongée s'étendant le long et à distance réduite de la première barre,
- une connexion électrique entre la première barre et l'électrode allongée pour polariser électriquement cette dernière par la tension de la première barre,
- une résistance de limitation insérée dans ladite connexion électrique,
- un dispositif de mesure du courant de collection de charges de l'électrode, apparaissant lorsque cette dernière se trouve placée dans un gaz fortement ionisé, engendré par un arc.

Avantageusement, l'électrode, qui peut être un fil ou une barre conductrice, notamment en cuivre, est disposée le long de l'une des barres du jeu de barres en étant écartée de la barre d'une distance comprise entre 2 et 10 centimètres. L'électrode est par exemple portée par des supports isolants échelonnés et intercalés entre la barre et l'électrode. Dans le cas d'un jeu de barres tripolaire, l'électrode est de préférence associée à la barre du milieu afin de détecter indifféremment un arc s'amorçant sur l'une ou l'autre paire de barres.

La polarisation de l'électrode est obtenue par un montage à propre tension, grâce à une connexion électrique entre la barre et l'électrode. Cette connexion électrique comprend une résistance de limitation dont la valeur est calculée à partir de la tension du réseau pour interdire tout courant supérieur à 400 milliampères, évitant ainsi tout phénomène d'arc s'amorçant sur l'électrode. La connexion électrique comprend avantageusement en série de la résistance de limitation une diode électroluminescente ou éventuellement deux diodes montées tête-bêche qui signalent le passage d'un courant dans cette connexion électrique. Le signal optique délivré par la diode électroluminescente est transmis par une fibre optique à un bloc de traitement qui pilote le déclenchement du disjoncteur d'une manière bien connue des spécialistes.

En fonctionnement normal, l'électrode polarisée est portée à la tension de la barre associée, mais aucun courant ne parcourt la connexion électrique entre l'électrode et la barre. Lorsque l'électrode polarisée est placée dans un gaz fortement ionisé, par exemple dû à un arc s'amorçant entre deux barres, cette électrode crée un champ électrique qui pénêtre sur une profondeur inférieure au millimètre dans le plasma de l'arc et ce champ attire des particules chargées de signes contraires à la polarité de l'électrode. Ces particules se déchargent au contact de l'électrode et provoquent un courant dans la connexion électrique entre la barre et l'électrode, qui neutralise le flux de charge. La diode électroluminescente détecte ce courant de connexion de charge qui est compris entre 10 milliampères et 400 milliampères et l'éclairement en transitoire de la diode électroluminescente signale la présence des gaz ionisés, c'est-à-dire d'un arc. Le signal lumineux émis par la diode électroluminescente est transmis par une fibre optique classique à un bloc de traitement comprenant un système me photo-détecteur et une électronique de traitement à seuil, émettant un signal de déclenchement du disjoncteur. Le bloc électronique de traitement peut bien entendu être incorporé au déclencheur du disjoncteur, notamment lorsque ce déclencheur est du type statique.

L'électrode est disposée à proximité de la barre dans une zone écartée de l'arc, afin d'éviter toute destruction de l'électrode par l'action de l'arc. L'électrode est supportée par des entretoises ou supports échelonnés s'étendant entre la barre et l'électrode.

D'autres avantages et caractéristiques ressortiront plus clairement de la description qui va suivre d'un mode de mise en oeuvre de l'invention, donné à titre d'exemple non limitatif et représenté aux dessins annexés, dans lesquels:

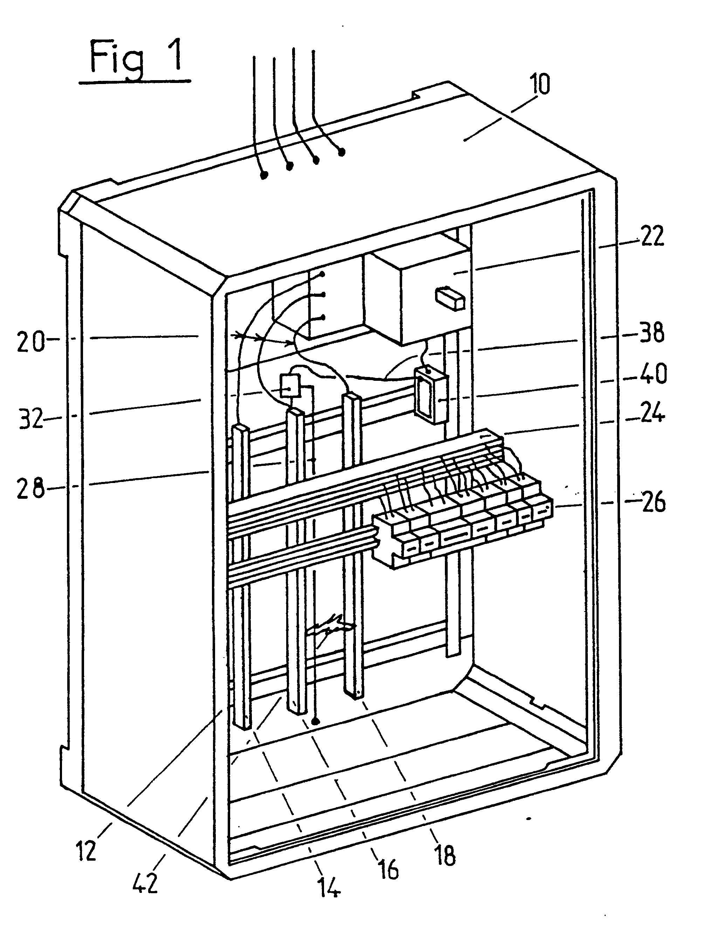

- la figure 1 est une vue schématique en perspective d'un coffret électrique ayant un jeu de barres équipé d'un dispositif de détection d'arc selon l'invention ;
- la figure 2 est une vue schématique en perspective du détecteur d'arc associé à un jeu de barres triphasé.

Sur les figures, un coffret basse tension 10, qui peut être une armoire ou une cellule basse tension ou moyenne tension contient un jeu de barres triphasé 12 constitué de trois barres conductrices 14, 16, 18, s'étendant parallèlement suivant la direction verticale du coffret. Les trois barres 14, 16, 18, sont raccordées par des conducteurs 20 à un disjoncteur 22 d'alimentation du coffret 10. Le jeu de barres 12 alimente par l'intermédiaire d'un répartiteur 24 des disjoncteurs 26 de départ, ces disjoncteurs pouvant d'ailleurs être raccordés directement au jeu de barres 12 selon l'agencement du coffret ou de la cellule. Les seuils de déclenchement du disjoncteur 22 de tête et des disjoncteurs de départ 26 sont choisis pour assurer un déclenchement sélectif, un défaut en aval du coffret étant éliminé par l'ouverture du disjoncteur de départ correspondant 26, tandis que la partie saine du réseau reste alimentée par le disjoncteur de tête 22 restant en position fermée. De tels coffrets ou tableaux sont bien connus des spécialistes et il est inutile de les décrire plus en détails.

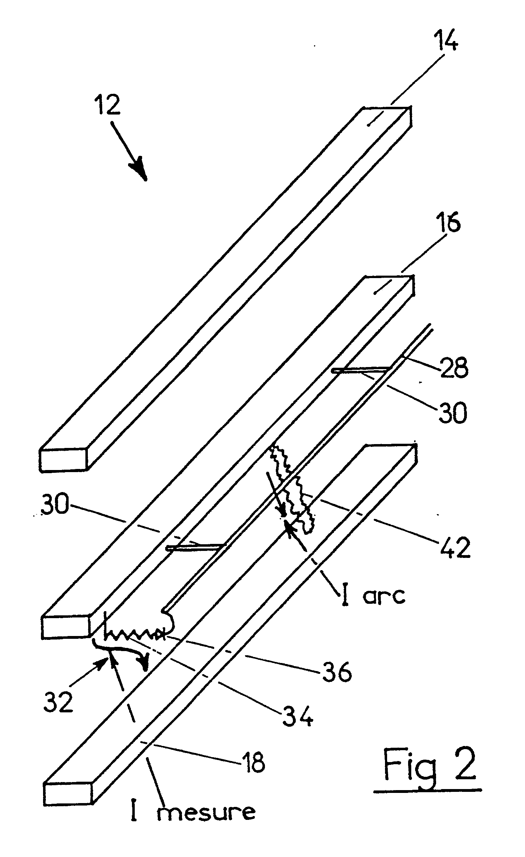

Selon l'invention, un dispositif de détection d'arc est associé au jeu de barres 12 pour émettre un signal de déclenchement du disjoncteur de tête 22, dès la naissance d'un arc apparaissant sur le jeu de barres 12 ou à l'intérieur du coffret 10. Le dispositif de détection d'arc comprend une tige conductrice 28 fixée à la barre centrale 16 du jeu de barres 12 par des supports isolants 30, échelonnés le long de la barre. En se référant à la figure 2, on voit que la tige conductrice 28 formant une électrode est décalée latéralement par rapport au plan contenant le jeu de barres 12, en étant disposée au droit de la barre médiane 16. L'électrode 28 s'étend sur toute la longueur de la barre 16 et est connectée électriquement à cette dernière par une connexion électrique 32, constituée par une résistance de limitation 34, connectée en série d'une diode électroluminescente 36. La diode électroluminescente 36 peut avantageusement être remplacée par une paire de diodes électroluminescentes montées tête-bêche. En regard de la diode électroluminescente 36 est placée une fibre optique 38 véhiculant le signal lumineux émis par la diode électroluminescente 36 vers un bloc électronique de traitement 40. Ce bloc 40 est relié électriquement au disjoncteur de tête 22, de manière à provoquer l'ouverture rapide de ce disjoncteur de tête 22 lors de la réception d'un signal lumineux émis par la diode électroluminescente 36. Le bloc de traitement 40 comporte un circuit électronique à seuil d'un type bien connu, limitant les risques de déclenchement intempestif.

Le dispositif de détection d'arc fonctionne de la manière suivante :

- en fonctionnement normal, le disjoncteur de tête 22 alimente par l'intermédiaire du jeu de barres 12 et des disjoncteurs de départ 26 les charges (non représentées) raccordées aux disjoncteurs divisionnaires 26. L'électrode 28 est polarisée à la tension de la barre associée 16 par le circuit de connexion 32 et la diode électroluminescente 36 est éteinte. Lors d'un amorçage, par exemple d'un arc 42, entre les barres 16, 18, les gaz ionisés par l'arc viennent lécher l'électrode 28 et les particules ionisées de polarités opposées à celles de l'électrode 28 sont attirées par le champ électrique de cette électrode 28. Il se crée un courant dans la connexion électrique 32 pour neutraliser le flux de charge et ce courant est suffisant pour éclairer la diode électroluminescente 36. Le signal optique de la diode électroluminescente 36 est transmis par la fibre optique 38 au bloc de traitement 40 pour provoquer l'ouverture du disjoncteur de tête 22. Ce dispositif simple détecte rapidement les arcs naissants, un arc de 1000 ampères étant par exemple détecté en un temps ≤ 600 microsecondes, la distance entre l'électrode 28 et la barre 16 étant de l'ordre de la distance entre les barres 14, 16, 18. L'ouverture rapide du disjoncteur de tête 22 permet d'éviter une destruction du coffret 10 ou tout au moins à limiter les dégâts. Ce déclenchement intervient indépendamment du déclencheur instantané du disjoncteur de tête 22, lequel peut être adapté à la sélectivité requise. Il est facile de voir que l'électrode 28 détecte un arc apparaissant en un point quelconque du jeu de barres 12 et entre l'une quelconque de ces barres. Le signal optique de détection d'arc peut être émis en un emplacement quelconque du jeu de barres 12, de préférence à proximité du disjoncteur de tête 22. La mesure du courant de collection de charge peut bien entendu être réalisée électriquement ou de toute autre manière appropriée, la solution décrite d'une diode électroluminescente 36 et d'une fibre optique 38 présentant l'avantage d'une isolation galvanique du jeu de barres et du bloc de traitement 40. Ce bloc de traitement 40 peut être incorporé au disjoncteur de tête 22 ou constituer une partie intégrante du déclencheur de ce disjoncteur, notamment du déclencheur électronique incorporé à ce disjoncteur de tête 22. La fibre optique 38 peut être remplacée par un conducteur électrique raccordé à une photodiode recevant le signal optique émis par la diode électroluminescente 36 ou par tout autre mode de transmission.

L'électrode 28 est décalée latéralement du jeu de barres 12 et est ainsi à l'abri d'une action directe de l'arc 42, susceptible de l'endommager. La valeur de la résistance de limitation est choisie pour éviter tout phénomène d'arc au niveau de l'électrode 28, le courant dans la connexion électrique 32 étant limité à une valeur maximale de 400 milliampères. Le jeu de barres 12 peut s'étendre dans différents compartiments du coffret 10, la détection réalisée par la connexion électrique 32 étant située dans l'un quelconque de ces compartiments. Le dispositif de détection d'arc fonctionne à propre tension, la polarisation de l'électrode 28 étant réalisée par la tension de la barre 16. Il est clair que ce dispositif de détection d'arc peut être utilisé pour un jeu de barres monophasé ou tout autre jeu de barres de basse tension ou de moyenne tension, le dispositif détectant la présence d'un gaz fortement ionisé à l'intérieur du coffret 10.

Le dispositif est particulièrement simple et il peut être adjoint à un coffret existant sans modification notable. L'électrode 28 peut être disposée en d'autres emplacements selon la structure du jeu de barres à surveiller et l'invention est bien entendu nullement limitée au mode de mise en oeuvre plus particulièrement décrit.

**Revendications**

1. Dispositif de détection d'un arc sur un jeu de barres (12) d'un tableau ou d'un coffret électrique (10) moyenne tension ou basse tension ayant une première (16) et une deuxième (14) barres de polarités différentes qui s'étendent parallèlement, caractérisé en ce qu'il comprend :
   - une électrode allongée (28) s'étendant le long et à distance réduite de la première barre (16),
   - une connexion électrique (32) entre la première (16) barre et l'électrode allongée (28) pour polariser électriquement cette dernière par la tension de la première barre (16),
   - une résistance (34) de limitation insérée dans ladite connexion électrique (32),
   - un dispositif (36) de mesure du courant de collection de charges de l'électrode (28) apparaissant lorsque cette dernière se trouve placée dans un gaz fortement ionisé, engendré par un arc (42).

2. Dispositif de détection selon la revendication 1, caractérisé en ce que ladite connexion électrique (32) comprend en série de la résistance (34) de limitation une diode (36) électroluminescente dont l'éclairement constitue ladite mesure du courant de collection de charges.

3. Dispositif de détection selon les revendications 1 ou 2, caractérisé en ce que la valeur de ladite résistance (34) de limitation est choisie en fonction de la tension sur le jeu de barres (12) pour limiter le courant dans ladite connexion électrique (32) à une valeur inférieure à 400 mA.

4. Dispositif de détection selon la revendication 2 ou 3, caractérisé en ce qu'il comporte une fibre optique (38) captant la lumière émise par ladite diode électroluminescente (36) et la transmettant à un bloc électronique (40) de traitement et de commande.

5. Dispositif de détection selon l'une quelconque des revendications précédentes, caractérisé en ce que ladite électrode (28) est disposée latéralement du plan contenant lesdites première (16) et deuxième (14) barres sensiblement au niveau de la première barre (16) pour être à l'abri de l'action d'un arc (42) s'amorçant entre les deux barres (14, 16).

6. Dispositif de détection selon la revendication 5, caractérisé en ce que l'écartement entre l'électrode (28) et la première barre (16) est compris entre deux et dix centimètres.

7. Dispositif de détection selon l'une quelconque des revendications précédentes, caractérisé en ce que l'électrode (28) est solidaire mécaniquement à la première barre (16) par des supports isolants (30) échelonnés le long de la barre (16).

8. Dispositif de détection selon l'une quelconque des revendications précédentes pour un jeu de barres triphasé (12) alimenté par un disjoncteur électrique (22), caractérisé en ce que ladite électrode (28) est associée à la barre (16) du milieu du jeu de barres (12) et que ledit dispositif de détection (34, 36) commande le déclenchement dudit disjoncteur (22) dès la naissance d'un arc (42) sur le jeu de barres (12).

## Claims

1. An arc detection device on a busbar (12) of a medium voltage or low voltage electrical switchboard or enclosure (10) having a first (16) and second bar (14) of different polarities which extend in parallel, characterized in that it comprises :
   - an elongated electrode (28) extending along the first bar (16) at a short distance therefrom,
   - an electrical connection (32) between the first bar (16) and the elongated electrode (28) to electrically polarise the latter by the voltage of the first bar (16),
   - a limiting resistance (34) inserted in said electrical connection (32),
   - a device (36) for measuring the charge collection current of the electrode (28) occurring when the latter is placed in a highly ionised gas, generated by an arc (42).

2. The detection device according to claim 1, characterized in that said electrical connection (32) comprises in series with the limiting resistance (34) a light-emitting diode (36), lighting of which constitutes said measurement of the charge collection current.

3. The detection device according to claim 1 or 2, characterized in that the value of said limiting resistance (34) is chosen in terms of the voltage on the busbar (12) to limit the current in said electrical connection (32) to a value lower than 400 mA.

4. The detection device according to claim 2 or 3, characterized in that it comprises an optic fiber (38) picking up the light emitted by said light-emitting diode (36) and transmitting it to an electronic processing and control unit (40).

5. The detection device according to one of the above claims, characterized in that said electrode (28) is located laterally from the plane containing said first (16) and second (14) bars appreciably at the level of the first bar (16) to be protected from the action of an arc (42) striking between the two bars (14, 16).

6. The detection device according to claim 5, characterized in that the distance separating the electrode (28) and the first bar (16) is comprised between two and ten centimetres.

7. The detection device according to one of the above claims, characterized in that the electrode (28) is mechanically secured to the first bar (16) by insulating supports (30) located at intervals along the bar (16).

8. The detection device according to one of the above claims for a three-phase busbar (12) supplied by an electrical circuit breaker (22), characterized in that said electrode (28) is associated with the middle bar (16) of the busbar (12) and that said detection device (34, 36) controls tripping of said circuit breaker (22) as soon as an arc (42) forms on the busbar (12).

## Patentansprüche

1. Lichtbogen-Detektiervorrichtung auf einer Sammelschiene (12) einer Mittel- oder Niederspannungs-Schalttafel oder eines elektrischen Schaltschrankes mit einer ersten (16) und einer zweiten (14) parallel laufenden Schiene, von verschiedener Polarität, dadurch gekennzeichnet, dass sie aufweist:
   - eine längliche Elektrode (28), die entlang und im kleinen Abstand der ersten Schiene (16) läuft,
   - eine elektrische Verbindung (32) zwischen der ersten Schiene (16) und der länglichen Elektrode (28), um diese letztere elektrisch durch die Spannung der ersten Schiene (16) zu polarisieren,
   - einen Begrenzungswiderstand (34), der in der genannten elektrischen Verbindung (32) geschaltet ist,
   - eine Messvorrichtung (36) des durch die Elektrode (28) gesammelten Ladungen auftretenden Stromes, wenn sich die Elektrode in einem durch den Bogen (42) stark ionisierten Gas befindet.

2. Detektiervorrichtung nach Anspruch 1, dadurch gekennzeichnet, dass die genannte elektrische Verbindung (32) eine in Serie mit dem Begrenzungswiderstand (34) geschaltete Leuchtdiode (36) aufweist, deren Aufleuchten die genannte Messung des Sammelladungsstromes bildet.

3. Detektiervorrichtung nach Anspruch 1 oder 2, dadurch gekennzeichnet, dass der Wert des Begrenzungswiderstandes (34) in Abhängigkeit der Sammelschienenspannung gewählt wird, um den Strom in der genannten elektrischen Verbindung (32) auf einen Wert kleiner als 400mA zu begrenzen.

4. Detektiervorrichtung nach Anspruch 2 oder 3, dadurch gekennzeichnet, dass sie einen optischen Leiter (38) zum Auffangen des durch die Leuchtdiode (36) ausgesandten Lichtes und zum Weiterleiten an einen elektronischen Steuer- und Ausarbeitungsblock (40) aufweist.

5. Detektiervorrichtung nach einem der vorigen Ansprüche, dadurch gekennzeichnet, dass die genannte Elektrode (28) seitlich von der die erste (16) und die zweite Schiene (14) enthaltende Fläche und ungefähr auf der Höhe der ersten Schiene (16) aufgestellt ist, um vor dem zwischen den beiden Schienen (14, 16) auftretenden Lichtbogen (42) geschützt zu sein.

6. Detektiervorrichtung nach Anspruch 5, dadurch gekennzeichnet, dass der Abstand zwischen der Elektrode (28) und der ersten Schiene (16) zwischen zwei und zehn Zentimetern liegt.

7. Detektiervorrichtung nach einem der vorigen Ansprüche, dadurch gekennzeichnet, dass die Elektrode (28) mechanisch durch längs der Schiene (16) gestaffelte Isolierträger (30) an der ersten Schiene (16) befestigt ist.

8. Detektiervorrichtung nach einem der vorigen Ansprüche, für eine einen elektrischen Leistungsschalter (22) speisende dreiphasige Sammelschiene (12), dadurch gekennzeichnet, dass die genannte Elektrode (28) an der mittleren Schiene (16) der Sammelschiene (12) gekuppelt ist, und dass die genannte Detektiervorrichtung (34, 36) das Auslösen des genannten Leistungsschalters (22) sofort beim Auftreten des Lichtbogens (42) auf der Sammelschiene (12) bewirkt.

Fig 1

**14**

**12**

**16**

**28**

**30**

**30**

**42**

I arc

**36**

**34**

**32**

**18**

I mesure

## Fig 2